Europäisches Patentamt

European Patent Office

Office européen des brevets

(11) Publication number: **0 409 193 B1**

(12) **EUROPEAN PATENT SPECIFICATION**

(45) Date of publication of patent specification: **13.04.94** (51) Int. Cl.5: **C04B 35/58**

(21) Application number: **90113763.8**

(22) Date of filing: **18.07.90**

(54) **Process for production of sintered silicon nitride made article.**

(30) Priority: **18.07.89 JP 186524/89**
**18.06.90 JP 160689/90**

(43) Date of publication of application:
**23.01.91 Bulletin 91/04**

(45) Publication of the grant of the patent:
**13.04.94 Bulletin 94/15**

(84) Designated Contracting States:
**DE FR GB**

(56) References cited:
**EP-A- 0 080 711**
**EP-A- 0 107 919**
**FR-A- 2 376 090**

**J. CERAM. ASS. JAPAN, vol. 94, no. 1, 1986, pages 106-111; M. MITOMO et al.: "Sintering behavior of Si3N4 with Y2O3 and Al2O3 addition"**

(73) Proprietor: **SUMITOMO ELECTRIC INDUS-TRIES, LTD.**
**5-33, Kitahama 4-chome,**
**Chuo-ku**
**Osaka-shi, Osaka 541(JP)**

(72) Inventor: **Nishioka, Takao, C/o Itami Works**
**Sumitomo Electric Indl Ltd.,**
**1-1 Koyakita 1-chome**
**Itami-shi, Hyogo-ken(JP)**
Inventor: **Takano, Yoshishige, C/o Itami Works**
**Sumitomo Electric Indl Ltd.,**
**1-1 Koyakita 1-chome**
**Itami-shi, Hyogo-ken(JP)**
Inventor: **Matsunuma, Kenji, C/o Itami Works**
**Sumitomo Electric Indl Ltd.,**
**1-1 Koyakita 1-chome**
**Itami-shi, Hyogo-ken(JP)**
Inventor: **Higuchi, Matsuo, C/o Itami Works**
**Sumitomo Electric Indl Ltd.,**
**1-1 Koyakita 1-chome**
**Itami-shi, Hyogo-ken(JP)**
Inventor: **Miyake, Masaya, C/o Itami Works**
**Sumitomo Electric Indl Ltd.,**
**1-1 Koyakita 1-chome**
**Itami-shi, Hyogo-ken(JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

Field of the Invention

The present invention relates to a process for the production of a sintered silicon nitride made article having a high strength.

Description of the Related Art

Generally, strength of a ceramic material depends on, for example, a porosity ratio, a particle size and a surface condition of a crystal. Such factors affect strength of a sintered article made of silicon nitride which is one of important ceramic materials used for structural members.

In order to increase the strength of a $Si_3N_4$ based sintered article, sintering aids and sintering processes have been developed. For example, Am. Ceram. Soc. Bull., 52, 560, (1973) reports that a bending strength of up to 100 Kg/mm$^2$ with the use of a hot press sintering, and Preprint for the 1981 Annual Conference of the Ceramic Association of Japan, 178 (1981) reports that the same strength as above with the use of a low pressure sintering. In each case, the strength is increased by extremely reducing the porosity.

Japanese Patent Kokoku Publication Nos. 21091/1974 and 38448/1973 describe a process for the production of the silicon nitride made sintered article based on $Si_3N_4$-$Y_2O_3$-$Al_2O_3$ in which $Y_2O_3$ is used as a main sintering aid.

As described in these Publications, it may be contemplated thought that the strength and toughness of the ceramic material are increased since $Si_3N_4$ in a $\beta$-crystal lattice is present in a fibrous structure and dispersed in a matrix phase. Namely, the lattice of $\beta$-crystal is a hexagonal one, and an anisotropical crystal growth along C axis is effectively used. A fibrous particle of $\beta$-$Si_3N_4$ crystal may grow to more than ten and few microns along a longitudinal axis as described in Japanese Patent Kokoku Publication No. 38448/1973 and J. Ceram. Ass. Jpn., 94, 96 (1986).

Since the growth of the fibrous structure is required in the prior arts as described above, abnormal growth of the crystal particles and generation of pores in relation to such growth may arise. Thus, this growth is not necessarily effective to increase the strength of the ceramic material.

In addition, in the case where the hot press sintering is used in order to form the fibrous structure as described in Japanese Patent Kokoku Publication No. 21091/1974 or where a raw material of the $\beta$-crystal of $Si_3N_4$ which has been thermally treated for the fibrous structure growth is added, the increase of the strength cannot be expected.

SUMMARY OF THE INVENTION

It is an object of the present invention to provide a silicon nitride made article having a high mechanical strength which overcomes the problems as described above.

It is found that a sintered article comprising a matrix phase of uniform and fine $\beta$-crystal particles having a high aspect ratio is stronger than the fiber reinforced sintered article which is produced by dispersing the long fibrous crystal in the matrix as described above.

Accordingly, the present invention provide a process for the production of a sintered article comprising shaping a raw material powder comprising silicon nitride and sintering a shaped article at an elevated temperature,
characterized in that
at least one thermal treatment is performed with said shaped article in a non-oxidizing atmosphere at a temperature of 1300 to 1650°C for at least two hours to form beta-silicon nitride of not less than 85% calculated from X-ray diffraction patterns according to the following equation (I):

$$\frac{I_\beta(101) + I_\beta(210)}{I_\alpha(102) + I_\alpha(210) + I_\beta(101) + I_\beta(210)} \times 100 \qquad (I)$$

wherein I indicates an integral area of each crystalline phase peak for alpha- and beta-silicon nitride, and to increase a relative density of the article to not less than 80%, preferably to 80 to 85%, and that the thermally treated article is sintered at a temperature of 1700 to 2000 °C.

The article produced by the present process has a a high mechanical strength and overcomes the problems as described above.

The present invention includes following preferred embodiments:

(1) The process in which the raw material comprises $Si_3N_4$ powder having an average particle size of not more than 0.8 $\mu$m and a particle size distribution ($3\sigma$) of not more than 0.4 $\mu$m;

(2) The process in which the sintered article contains $\beta$-silicon nitride particles of not less than 15 % by volume relative to all of $\beta$- silicon nitride which has a major axis size of not more than 5 $\mu$m and an aspect ratio of not less than 5;

(3) The process in which the non-oxidizing atmosphere comprises a nitrogen atmosphere under a pressure of 101,33 kPa to 10133 kPa (1 to 100 atms) at a temperature of 1300 to 1500 °C a nitrogen atmosphere under a pressure of 13,33 to 1013,25 kPa (100 torrs to 10 atms) at a temperature of 1450 to 1650 °C and the sintering is carried out under a nitrogen atmosphere under a pressure of 101,33 to 202650 kPa (1 to 2000 atms) at a temperature of 1700 to 2000 ° C; and

(4) The process in which the raw material of silicon nitride power is produced by the imide decomposition method.

## BRIEF DESCRIPTION OF THE DRAWINGS

Fig. 1 is a graph showing a relation between an average size of a crystal particle along a major axis of the crystal particle and a strength of the sintered article produced by the present process, and

Fig. 2 is a graph showing a relation between an average aspect ratio of the crystal particle and the strength.

## DETAILED DESCRIPTION OF THE INVENTION

The present invention will be hereinafter explained in detail.

In the sintering of silicon nitride, a densification is generally thought to proceed as follows; generation of a liquid phase by the addition of a sintering aid into $\alpha$-silicon nitride powder, dissolution of densified $\alpha$-silicon nitride into the liquid phase by re-arrangement of atoms due to the generation of the liquid phase, nucleus generation of $\beta$-silicon nitride by transformation from $\alpha$ to $\beta$, and densification by growth of $\beta$-silicon nitride.

It is found that, by the thermal treatment at a temperature of 1300 to 1650 °C at which the transformation from $\alpha$ to $\beta$ occurs for at least 2 hours to form $\beta$-silicon nitride of not more than 85 %, which is calculated according to the equation (I), relative to $\alpha$- and $\beta$-silicon nitride crystalline phases and to increase the relative density of the treated article to not less than 80 %, preferably to 80 to 85 %, the sintered article comprising a matrix of the uniform and fine $\beta$-silicon nitride particles having a high aspect ratio, that is, the sintered article having a high strength, is produced.

The transformation from $\alpha$ to $\beta$ does not proceed sufficiently in the thermal treatment at a temperature of lower than 1300 °C. The transformation from $\alpha$ to $\beta$ proceeds so rapidly in the thermal treatment at a temperature of higher than 1650 °C that the size of the generated silicon nitride particles scatters, whereby the uniform and fine structure cannot be formed.

When a ratio of the formed $\beta$-silicon nitride is less than 85 % which is calculated according to the equation (I), the transformation from $\alpha$ to $\beta$ proceeds at the higher temperature after the thermal treatment, whereby ununiform particles tend to be produced. When the relative density is not more than 80 %, the $\beta$-silicon nitride tends to grow along its major axis during the sintering step after the thermal treatment, whereby the major axis size of the crystal unpreferably becomes more than 5 $\mu$m.

In order to generate the nuclei of the $\beta$-silicon nitride having the anisotropy, components of the liquid phase and an atmosphere surrounding the liquid phase are important at a temperature of 1300 to 1500 °C at which the liquid phase is formed by a reaction between an added sintering aid powder and an oxide or an oxynitride such as $SiO_2$ or $Si_2N_2O$ mainly present on surfaces of the $Si_3N_4$ raw powder particles. Namely, when an amount of dissolved Si or N in the liquid phase is increased, an amount of the generated nuclei of the anisotropical crystal is increased. Thus, in order to increase an amount of the dissolved $SiO_2$ or $Si_2N_2O$, following manners may be used.

Generally, the finer the raw powder of $Si_3N_4$ is, the more the oxidized amount of its surface is. However, it is not preferable that the particle size distribution and the average particle size of the raw powder are remarkably deviated from the ranges as described above. Thus, in order to control the transformation from $\alpha$ to $\beta$ effectively, in addition to the average particle size of not more than 0.8 $\mu$m and the particle size distribution (3$\sigma$) of not more than 0.4 $\mu$m, a specific surface area of the raw powder is preferably in the range of 10 to 18 m$^2$/g when measured by BET and/or the an amount of surface oxygen is preferably in the range of 1.5 to 2.5 % by weight relative to total weight of the raw powder. For the control of the amount of the surface oxygen, the surface of the powder may be beforehand oxidized in the air at a temperature of up to 800 °C for 2 to 5 hours. Alternatively, a synthesized $Si_2N_2O$ powder may be separately added.

With respect to the atmosphere during the thermal treatment, increase of a nitrogen partial pressure is effective during the initial period of the treatment when the liquid phase is generated and the transformation from $\alpha$ to $\beta$ is initiated, that is, when the atmosphere is at a temperature of 1300 to 1500 °C. The nitrogen partial pressure is preferably in the range of 101,33 to 10133 kPa (1 to 100 atms). When the pressure is less than 1 atm, the effect as described above is insufficiently achieved, and when more than 10133 kPa (100 atms), pores may be generated in the initial period of the sintering step. In addition, it is practically more preferred to continuously renew the nitrogen gas by supplying a fresh nitrogen gas as a carrier during the sintering step. The effect achieved by the renewal of the nitrogen gas depends on a partial pressure of oxygen therein. Thus, the oxygen content in the supplied nitrogen gas is preferably not more than 100 ppm.

The initial period of the crystal transformation from $\alpha$ to $\beta$ has been described and the latter period of the crystal transformation will be hereinafter described.

The latter period of the crystal formation is intended to mean a period during which a crystal ratio defined as $\beta/(\alpha + \beta)$ according to the equation (I) is in the range of 50 to 100 % and the temperature is in the range of 1450 to 1650 °C. The crystal ratio is determined by usual X-ray diffractometry. In the latter period, the crystal nuclei generated during the initial period uniformly grow to be more anisotropical, that is, to have the higher aspect ratio. For such nucleus growth, the atmosphere preferably has the partial pressure of nitrogen in the range of 13,33 to 1013,25 kPa (100 torrs to 10 atms). When the nitrogen partial pressure is lower than 13,33 kPa (100 torrs), $Si_3N_4$ is decomposed, and when higher than 1013,25 kPa (10 atms), the anisotropical crystal growth is suppressed.

According to the present invention, at least 2 hours are required for the thermal treatment as described above, and at least 3 hours are required for the more sufficient thermal treatment including the size effect treatment of the sintered article. Further, the temperature may be continuously changed with a temperature gradient during the thermal treatment and the similar effects as described above can be achieved. In this case, the temperature gradient is preferably in the range of 2 to 5 °C per minute.

In order to form the sintered article having the matrix of the fine and uniform $\beta$-crystal particles of $Si_3N_4$ with the high aspect ratio, selection of the raw material is also important. Preferably, the raw silicon nitride powder has the average particle size of not more than 0.8 $\mu$m and the particle size distribution (3$\sigma$) of not more than 0.4 $\mu$m to form the sintered article having the desired dense micro structure. In addition, the ratio of $\alpha$-crystal relative to the total amount of $\alpha$- and $\beta$-crystal phases of the raw silicon nitride powder is preferably not less than 90 %, more preferably not less than 95 %.

When the average particle size of the raw silicon nitride is more than 0.8 $\mu$m or the particle size distribution (3$\sigma$) is more than 0.4 $\mu$m, the sintered article may have large silicon nitride particles, and in any condition, fine particles having the high aspect ratio cannot be formed and the increase of the strength cannot be achieved.

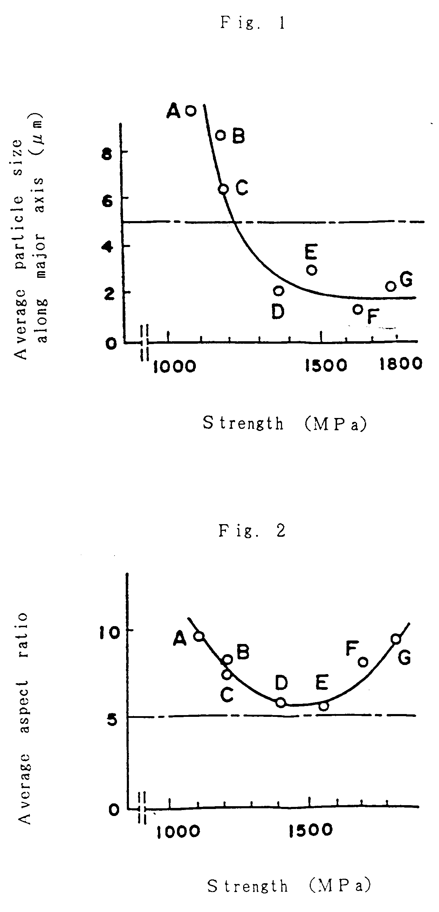

The structure of the sintered articles produced by the present process was evaluated according to a method of G. Ziegler et al, Science of Ceramics, 12, 361 (1984). A relation of the results of the above evaluation and the strength of the sintered article (according to JIS R 1601, three point bending test) is shown in the graph of Fig. 1.

Further, a relation between the average aspect ratio of the sintered article and the strength is shown in the graph of Fig. 2.

It is found that the high strength sintered article of the present invention, especially one having the high strength of at least 130 Kg/mm$^2$, has the average particle size along the longitudinal axis of not more than 5 $\mu$m and the aspect ratio of not less than 5.

From the above results, it is seen that the sintered article comprising the $\beta$-crystal particles having the average major axis size of not more than 5 $\mu$m and the average aspect ratio of not less than 5 in a network structure has the larger strength than the conventional $Si_3N_4$ based material.

In addition, it is found that the sintered article according to the present invention has high reliability, that is, a high Weibull modulus (m = 15 to 30), in addition to the larger strength, because of the fine and uniform crystal structure.

EXAMPLES

Example 1

92 Percents by weight of a $Si_3N_4$ raw material which had the average particle size of 0.3 $\mu$m, the particle size distribution ($3\sigma$) of 0.25 $\mu$m, the $\alpha$-crystal ratio of 97 % and the oxygen content of 1.3 % by weight, 4 % by weight of $Y_2O_3$ powder which had the average particle size of 0.7 $\mu$m, 3 % by weight of $Al_2O_3$ powder which had the average particle size of 0.4 $\mu$m and 1 % by weight of AIN powder which had the average particle size of 1.1 $\mu$m were wet mixed in ethanol for 100 hours in a ball mill. Then, the powder mixture was dried and CIP (cold Isostatic Press) shaped at a pressure of 294199,5 kPa (3000 Kg/cm$^2$). The shaped article was thermally treated in a nitrogen atmosphere under a pressure of 101,325 kPa (1 atm) at a temperature of 1600 °C for 4 hours and then sintered at a temperature of 1750 °C for 5 hours. The sintered article was HIP (Hot Isostatic Press) treated in a nitrogen atmosphere under a pressure of 101325 kPa (1000 atms) at a temperature of 1720 °C for 3 hours.

Test pieces (each 3 mm x 4 mm x 40 mm) were cut out from the obtained article and the bending strengths thereof were determined according to JIS R 1601.

Thirty test pieces were examined by the three point bending test and the average strength was 155 Kg/mm$^2$ and the Weibull modulus was 20. When a condition after the thermal treatment under the above conditions was examined with a model piece, the $\beta$-$Si_3N_4$ ratio was 90.2 % and the relative density was 85 %.

Example 2

The same raw materials as in Example 1 were used and the same procedures as in Example 1 were followed except the thermal treatment and sintering conditions as shown in Table 1. The bending strengths of the sintered articles were also shown in Table 1.

Example 3

Shaped articles produced as in Example 1 was thermally treated under the thermal treatment and sintering conditions indicated in Table 2 in a nitrogen atmosphere under a pressure of 810,6 kPa (8 atms). Then the sintered articles were HIP-treated in a nitrogen atmosphere under a pressure of 202650 kPa (2000 atms) at a temperature of 1800 °C for one hour. Thirty test pieces (each 3 mm x 4 mm x 40 mm) were cut out from each obtained sintered and the bending strength according to JIS R 1601 and the Weibull modulus thereof were determined.

In order to determine a volume ratio of the columnar crystal particles of $\beta$-$Si_3N_4$ in the sintered article, one sectional surface of the sintered article was lap finished and etched with an etching solution of $HF/HNO_3$ (= 2/1) at a temperature of 80 °C for 30 minutes. Then, the sectional surface was observed by a scanning electron microscope at a magnification of 2500 and an area occupied by the columnar crystal particles in the observed area were measured and then the area was converted to the volume ratio of the columnar particles. The properties and the structural evaluation of the sintered articles are shown in Table 3.

In the determination of the properties, the bending strength was measured by the three point bending test according to JIS R 1601 and the fracture toughness $K_{IC}$ was calculated by the Evans' equation (1976) with the indentation flow method under a 10 Kg load.

Table 1 (Examples)

| Run Number | Formulation (wt%) | | | Thermal Treatment °C x h | Sintering °C x h | After Thermal Treatment | | Three-Point Bending Strength (kg/mm$^2$) | Raw Si$_3$N$_4$ Powder | |
|---|---|---|---|---|---|---|---|---|---|---|
| | Y$_2$O$_3$ | Al$_2$O$_3$ | AlN | | | β Ratio (%) | Relative Density (%) | | Average Size (μm) | 3σ (μm) |
| 1 | 5 | 2 | – | 1350x3 | 1800x5 | 86 | 87 | 115 | 0.3 | 0.3 |
| 2 | 4 | 3 | – | 1600x4 | 1750x3 | 89 | 91 | 135 | 0.5 | 0.4 |
| 3 | 3.5 | 2.5 | 1 | 1550x6 | 1800x4 | 94 | 93 | 150 | 0.4 | 0.2 |
| 4 | 3 | 2 | 1.5 | 1500x4 | 1850x3 | 90 | 90 | 146 | 0.7 | 0.2 |
| 5 | 4 | 2 | 1 | 1650x2 | 1750x4 | 92 | 92 | 112 | 0.7 | 0.35 |
| 6 | 5 | 2 | 1 | 1350x8 | 1800x2 | 88 | 89 | 135 | 0.6 | 0.25 |
| 7 | 3 | 3 | 1 | 1500x6 | 1900x2 | 91 | 94 | 142 | 0.5 | 0.35 |
| 8 | 3 | 3 | 0 | 1450x3 | 1800x6 | 86 | 90 | 153 | 0.5 | 0.3 |
| 9 | 5 | 2 | 1 | 1600x2 | 1700x8 | 91 | 92 | 149 | 0.3 | 0.3 |
| 10 | 5 | 5 | 1 | 1550x4 | 1850x4 | 94 | 92 | 145 | 0.3 | 0.2 |

Note: HIP treatment 1720 °C x 2h in nitrogen atmosphere under pressure of $\sqrt{}$ (1000 atms) 101325 kPa

EP 0 409 193 B1

Table 1 (cont.) (Comparative Examples)

| Run Number | Formulation (wt%) | | | Thermal Treatment °C x h | Sintering °C x h | After Thermal Treatment | | Three-Point Bending Strength (kg/mm$^2$) | Raw Si$_3$N$_4$ Powder | |
|---|---|---|---|---|---|---|---|---|---|---|
| | Y$_2$O$_3$ | Al$_2$O$_3$ | AlN | | | β Ratio (%) | Relative Density (%) | | Average Size (μm) | 3σ (μm) |
| 11 | 4 | 3 | − | − | 1750x3 | − | − | 85 | 0.5 | 0.4 |
| 12 | 4 | 3 | − | 1600x0.5 | 1750x3 | 70 | 82 | 98 | 0.5 | 0.4 |
| 13 | 4 | 3 | − | 1600x2 | 1750x3 | 85 | 88 | 113 | 0.5 | 0.4 |
| 14 | 3.5 | 2.5 | 1 | 1550x6 | 1800x4 | 95 | 95 | 97 | 1.0 | 0.8 |
| 15 | 4 | 2 | 1 | 1650x10 | 1750x4 | 98 | 93 | 102 | 0.7 | 0.35 |

Note: Run Nos. 11 and 12 are comparative with Run No. 2;
Run No. 14 is comparative with Run No. 3; and
Run NO. 15 is comparative with Run No. 5.

EP 0 409 193 B1

Table 2

| Run Number | 1st Thermal Treatment | | 2nd Thermal Treatment | | Sintering Condition | After Thermal Treatments | |
|---|---|---|---|---|---|---|---|
| | °C x h | $N_2$ partial pressure (atm) | °C x h | $N_2$ partial pressure (kPa) (atm) | °C x h | β Ratio (%) | Relative Density (%) |
| 1 | 1350x2 | 10 | 1550x3 | 506,6 (5) | 1750x6 | 86 | 87 |
| 2 | 1350x2 | 50 | 1550x3 | 506,6 (5) | 1750x6 | 87 | 89 |
| 3 | 1350x2 | 100 | 1550x3 | 506,6 (5) | 1750x6 | 87 | 86 |
| 4 | 1350x2 | 10 | 1550x3 | 506,6 (5) | 1900x6 | 86 | 87 |
| *5 | 1350x0.5 | 10 | - | - | 1750x6 | - | - |
| *6 | - | - | 1550x3 | 10132,5 (100) | 1750x6 | 80 | 75 |
| *7 | - | - | 1550x0.5 | 10132,5 (100) | 1750x6 | - | - |
| 8 | 1350x2 | 10 | 1550x3 | 506,5 (5) | 1750x2 | 88 | 87 |
| 9 | 1350x2 | 10 | 1550x3 | 506,5 (5) | 1900x2 | 88 | 87 |
| 10 | 1450x5 | 50 | 1600x5 | 101,3 (1) | 1750x6 | 89 | 90 |
| *11 | - | - | - | - | 1750x6 | - | - |

Table 2 (cont.)

| Run Number | 1st Thermal Treatment | | 2nd Thermal Treatment | | Sintering Condition °C x h | After Thermal Treatments | |
|---|---|---|---|---|---|---|---|
| | °C x h | N$_2$ partial pressure (kPa) ((atm)) | °C x h | N$_2$ partial pressure (atm) | | β Ratio (%) | Relative Density (%) |
| 12 | 1450x5 | 50,66 (0.5) | 1600x5 | 1 | 1750x6 | 87 | 86 |
| *13 | - | - | 1600x5 | 100 | 1750x6 | 88 | 78 |
| 14 | 1450x5 | 5066,3 (50) | 1600x5 | 1 | 1900x6 | 89 | 90 |
| 15 | 1450x5 | 5066,3 (50) | 1600x5 | 1 | 1750x1 | 89 | 90 |
| 16 | - | - | 1600x5 | 1 | 1750x6 | 87 | 83 |
| 17 | 1450x5 | 5066,3 (50) | 1600x5 | 1 | 1750x3 | 89 | 90 |
| *18 | 1450x5 | 5066,3 (50) | 1600x5 | 0.1 | 1750x6 | 86 | 75 |
| *19 | 1450x0.5 | 5066,3 (50) | 1600x0.5 | 1 | 1750x6 | 84 | 82 |
| 20 | 1450x2 | 5066,3 (50) | 1600x2 | 1 | 1750x6 | 87 | 88 |

Note: * means a comparative example.

EP 0 409 193 B1

Table 3

| Run Number | JIS Three-Point Bending Strength (Kg/mm²) | Weibull Factor | Fracture Toughness (MPa√m) | Micro Structure of Sintered Article | | |
|---|---|---|---|---|---|---|
| | | | | Volume Ratio of Columnar crystal(%) | Average Crystal Size(μm) | Average Aspect Ratio |
| 1 | 135 | 21 | 8.8 | 21 | 3.0 | 8.3 |
| 2 | 145 | 25 | 9.2 | 24 | 3.2 | 8.5 |
| 3 | 125 | 19 | 7.3 | 20 | 3.0 | 7.2 |
| 4 | 129 | 18 | 10.5 | 28 | 4.9 | 6.3 |
| *5 | 104 | 12 | 5.7 | 14 | 6.4 | 4.7 |
| *6 | 88 | 9 | 5.2 | 12 | 5.0 | 4.3 |
| *7 | 94 | 11 | 5.6 | 12 | 5.7 | 4.4 |
| 8 | 140 | 22 | 8.2 | 20 | 2.8 | 8.4 |
| 9 | 132 | 20 | 10.3 | 25 | 4.5 | 6.0 |
| 10 | 152 | 27 | 9.0 | 23 | 2.8 | 8.8 |
| *11 | 85 | 10 | 5.3 | 10 | 4.8 | 4.2 |

10

Table 3 (cont.)

| Run Number | JIS Three-Point Bending Strength (Kg/mm$^2$) | Weibull Factor | Fracture Toughness (MPa√m̄) | Micro Structure of Sintered Article | | |
|---|---|---|---|---|---|---|
| | | | | Volume Ratio of Columnar crystal(%) | Average Crystal Size(μm) | Average Aspect Ratio |
| 12 | 124 | 18 | 7.8 | 21 | 3.2 | 7.0 |
| *13 | 85 | 8 | 5.3 | 11 | 5.3 | 4.3 |
| 14 | 127 | 17 | 11.4 | 27 | 4.8 | 6.5 |
| 15 | 138 | 21 | 8.2 | 21 | 2.8 | 7.2 |
| 16 | 123 | 19 | 7.0 | 19 | 3.8 | 6.2 |
| 17 | 135 | 23 | 8.5 | 22 | 3.0 | 7.6 |
| *18 | 88 | 9 | 5.2 | 12 | 5.1 | 4.2 |
| *19 | 102 | 11 | 5.4 | 14 | 4.8 | 4.0 |
| 20 | 125 | 20 | 7.2 | 20 | 3.2 | 7.3 |

Note: * means a comparative example.

Example 4

After 0.5 % by weight of a polycarboxylic acid base deflocculant and ethanol (purity 99.9 %) were added in 91 % by weight of a $Si_3N_4$ raw material which was produced by the imide decomposition method and had the average particle size of 0.5 $\mu$m, the particle size distribution ($3\sigma$) of 0.30 $\mu$m, the $\alpha$-crystal ratio of 98 % and the oxygen content of 1.4 % by weight relative to the total weight of silicon nitride raw material, and wet mixed in a ball mill with media balls made of sintered $Si_3N_4$ for 20 hours, 5 % by weight of $Y_2O_3$ powder which had the average particle size of 0.7 $\mu$m, 3 % by weight of $Al_2O_3$ powder which had the average particle size of 0.4 $\mu$m and 1 % by weight of AlN powder which had the average particle size of 1.1 $\mu$m were added to the mixture and wet mixed in the ball mill for further 120 hours to form a slurry. The slurry was sieved with a screen having a mesh size of 10 $\mu$m to remove attrition powders from the media balls and then dried in a vacuum drier.

The dried powder was subjected to granulation by a mesh with a mesh size of 200 $\mu$m to form granules, and shaped articles (each 60 mm x 40 mm x 10 mm) were formed from the granules by CIP. The pressure of CIP was 5000 Kg/cm$^2$.

The shaped article was placed in a sintering chamber made of h-BN sintered material and evacuated at a temperature of 1000 °C for one hour. Then the article was subjected to the first thermal treatment in a nitrogen atmosphere under a pressure of 1013,3 kPa (10 atms) at a temperature of 1450 °C for 5 hours and subsequently to the second thermal treatment in a nitrogen atmosphere under a pressure of 101,33 kPa (1 atm) at a temperature of 1600 °C for 5 hours.

The relative density and the $\beta$-crystal ratio of the thermally treated article were 90 % and 88 %, respectively. The thermally treated article was sintered in a nitrogen atmosphere under a pressure of 506,65 kPa (5 atms) at a temperature of 1750 °C for 5 hours, and further in a nitrogen atmosphere under a pressure of 10133 kPa (100 atms) at a temperature of 1850 °C for 2 hours. The sintered article was cut into test pieces each having a size of 3 mm x 4 mm x 40 mm and the three point bending strength of each test piece was determined according to JIS R 1601.

With respect to the thirty test pieces, the average strength was 140 Kg/mm$^2$ and the Weibull modulus was 22.

Example 5

The first and the second thermal treatments and the sintering step as in Example 4 were carried out continuously to form a sintered article. The bending strength and the Weibull factor were determined as in Example 4, and they were 150 Kg/mm$^2$ and 25, respectively.

Example 6

When the $Si_3N_4$ powder used in Example 4 was thermally treated in the air at a temperature of 700 °C for 10 hours, the oxygen content increased to 1.8 % by weight. This powder and the powder without such thermal treatment were used to form sintered articles in the same manner as in Example 4. The properties and the micro structure of the resulted articles were evaluated as in Example 3. The results are as follows:

| With use of powder without thermal treatment | |
|---|---|
| Average bending strength | 140 Kg/mm$^2$ |
| Weibull modulus | 22 |
| Volume ratio of columnar crystal particles | 21 % |
| Average crystal particle size | 3.4 $\mu$m |
| Average aspect ratio | 8.5 |

| With use of powder with thermal treatment | |
|---|---|
| Average bending strength | 155 Kg/mm$^2$ |
| Weibull modulus | 26 |
| Volume ratio of columnar crystal particles | 25 % |
| Average crystal particle size | 3.2 $\mu$m |
| Average aspect ratio | 9.8 |

As described above, the present process provides the sintered $Si_3N_4$ article having the much larger strength than the conventional article.

**Claims**

1. A process for the production of a sintered article comprising shaping a raw material powder comprising silicon nitride and sintering a shaped article at an elevated temperature,

characterized in that

at least one thermal treatment is performed with said shaped article in a non-oxidizing atmosphere at a temperature of 1300 to 1650°C for at least two hours to form beta-silicon nitride of not less than 85% calculated from X-ray diffraction patterns according to the following equation (I):

$$\frac{I_\beta(101) + I_\beta(210)}{I_\alpha(102) + I_\alpha(210) + I_\beta(101) + I_\beta(210)} \times 100 \qquad (I)$$

wherein I indicates an integral area of each crystalline phase peak for alpha- and beta-silicon nitride, and to increase a relative density of the article to not less than 80%, preferably to 80 to 85%, and that the thermally treated article is sintered at a temperature of 1700 to 2000°C.

2. The process according to claim 1, in which the raw material comprises $Si_3N_4$ powder having an average particle size of not more than 0.8 $\mu$m and a particle size distribution ($3\sigma$) of not more than 0.4 $\mu$m.

3. The process according to claim 1, in which the sintered article contains beta-silicon nitride particles of not less than 15% by volume relative to all of beta-silicon nitride which have a major axis size of not more than 5 $\mu$m and an aspect ratio of not less than 5.

4. The process according to claim 1 or claim 3 in which the non-oxidizing atmosphere comprises a nitrogen atmosphere under a pressure of 101.33 to 10133 kPa (1 to 100 atms) at a temperature of 1300 to 1500 °C <u>and</u> a nitrogen atmosphere under a pressure of 13.33 to 1013.25 kPa (100 torrs to 10 atms) at a temperature of 1450 to 1650 °C and the sintering is carried out under a nitrogen atmosphere under a pressure of 101.33 to 202650 kPa (1 to 2000 atms) at a temperature of 1700 to 2000 °C.

5. The process according to claim 2, in which the raw material of silicon nitride power is produced by the imide decomposition method.

**Patentansprüche**

1. Verfahren zur Herstellung eines gesinterten Gegenstandes, umfassend Formen eines Ausgangsmaterialpulvers, umfassend Siliziumnitrid, und Sintern eines geformten Gegenstandes bei einer erhöhten Temperatur
dadurch **gekennzeichnet**, daß
zumindest eine thermische Behandlung mit dem geformten Gegenstand in einer nicht oxidierenden Atmosphäre bei einer Temperatur von 1300 bis 1650°C für zumindest 2 Stunden durchgeführt wird, zur Bildung von $\beta$-Siliziumnitrid von nicht weniger als 85%, berechnet aus Röntgenbeugungsmustern entsprechend der folgenden Gleichung (I):

$$\frac{I_\beta(101) + I_\beta(210)}{I_\alpha(102) + I_\alpha(210) + I_\alpha(101) + I_\beta(210)} \times 100 \qquad (I)$$

worin I eine Integralfläche eines jeden Peaks kristalliner Phase für $\alpha$- und $\beta$-Siliziumnitrid anzeigt, und zur Erhöhung einer relativen Dichte des Gegenstandes auf nicht weniger als 80%, vorzugsweise 80 bis 85%, und
daß der thermisch behandelte Gegenstand bei einer Temperatur von 1700 bis 2000°C gesintert wird.

**2.** Verfahren nach Anspruch 1,
worin das Ausgangsmaterial Si₃N₄-Pulver mit einer durchschnittlichen Teilchengröße von nicht mehr als 0,8 $\mu$m und einer Teilchengrößenverteilung (3 $\sigma$) von nicht mehr als 0,4 $\mu$m umfaßt.

**3.** Verfahren nach Anspruch 1,
worin der gesinterte Gegenstand $\beta$-Siliziumnitridteilchen von nicht weniger als 15 Volumen%, bezogen auf das gesamte $\beta$-Siliziumnitridumfaßt, das eine Hauptachsengröße von nicht mehr als 5 $\mu$m und ein Längenverhältnis von nicht weniger als 5 hat.

**4.** Verfahren nach Anspruch 1 oder 3,
worin die nicht oxidierende Atmosphäre eine Stickstoffatmosphäre unter einem Druck von 101,33 bis 10133 kPa (1 bis 100 atm) bei einer Temperatur von 1300 bis 1500°C und eine Stickstoffatmosphäre unter einem Druck von 13,33 bis 1013,25 kPa (100 Torr bis 10 atm) bei einer Temperatur von 1450 bis 1600°C umfaßt und daß das Sintern unter einer Stickstoffatmosphäre unter einem Druck von 101,33 bis 202650 kPa (1 bis 2000 atm) bei einer Temperatur von 1700 bis 200°C durchgeführt wird.

**5.** Verfahren nach Anspruch 2,
worin das Ausgangsmaterial aus Siliziumnitridpulver durch das Imidzersetzungsverfahren erzeugt ist.

**Revendications**

**1.** Procédé pour la production d'un article fritté consistant à conformer une poudre de matière première comprenant du nitrure de silicium et à fritter un article conformé à une température élevée, caractérisé en ce que
on réalise au moins un traitement thermique avec ledit article conformé dans une atmosphère non oxydante à une température de 1300 à 1650°C pendant au moins 2 heures pour former du nitrure de silicium $\beta$ en une quantité pas inférieure à 85%, calculée à partir des spectres de diffraction de rayons X selon l'équation suivante (I):

$$\frac{I_\beta(101) + I_\beta(210)}{I_\alpha(102) + I_\alpha(210) + I_\beta(101) + I_\beta(210)} \quad\quad (I)$$

dans laquelle I indique une surface intégrale de chaque pic de phase cristalline pour le nitrure de silicium $\alpha$ et $\beta$, et on augmente la densité relative de l'article à pas moins de 80%, de préférence à une valeur de 80% à 85%, et
en ce que l'article traité thermiquement est fritté à une température de 1 700 à 2 000°C.

**2.** Procédé selon la revendication 1, dans lequel la matière première comprend une poudre de Si₃N₄ ayant une granulométrie moyenne ne dépassant pas 0,8 $\mu$m et une distribution granulométrique (3$\sigma$) ne dépassant pas 0,4 $\mu$m.

**3.** Procédé selon la revendication 1, dans lequel l'article fritté contient des particules de nitrure de silicium $\beta$ en une quantité pas inférieure à 15% en volume par rapport à tout le nitrure de silicium $\beta$ qui a une taille de grand axe ne dépassant pas 5 $\mu$m et un rapport d'aspect pas inférieur à 5.

**4.** Procédé selon la revendication 1 ou 3, dans lequel l'atmosphère non oxydante comprend une atmosphère d'azote sous une pression de 101,33 à 10 133 kPa (1 à 100 atmosphères) à une température de 1 300 à 1 500°C et une atmosphère d'azote sous une pression de 13,33 à 1013,25 kPa (100 torr à 10 atmosphères) à une température de 1450 à 1650°C et le frittage est réalisé dans une atmosphère d'azote sous une pression de 101,33 à 202650 kPa (1 à 2000 atmosphères) à une température de 1700 à 2000°C.

**5.** Procédé selon la revendication 2, dans lequel la matière brute de poudre de nitrure de silicium est produite par le procédé de décomposition d'un imide.

Fig. 1

Fig. 2